# EUROPÄISCHE PATENTSCHRIFT

(11) **EP 2 199 050 B1**
(45) Veröffentlichungstag und Bekanntmachung des Hinweises auf die Patenterteilung: **23.03.2016**
(21) Anmeldenummer: 09178911.5
(22) Anmeldetag: 11.12.2009
(51) Int. Cl.: B29C 39/08, B29C 39/26, B29C 33/42, B29C 39/00, B29C 35/02, B29C 37/00

(54) **Vorrichtung und Verfahren zur Herstellung eines Formkörpers mit Mikrostrukturen**
Method and device for producing a moulded part with microstructures
Dispositif et procédé de fabrication d'une pièce moulée avec microstructures

(30) Priorität: 19.12.2008 DE 102008054993
(43) Veröffentlichungstag der Anmeldung: 23.06.2010
(73) Patentinhaber: Andreas Hettich GmbH & Co. KG, 78532 Tuttlingen (DE)
(72) Erfinder: Hipp, Thomas, 78532 Tuttlingen (DE); Gehring, Frank, Dr. rer. nat., 78503 Tuttlingen (DE)
(74) Vertreter: Puschmann Borchert Bardehle Patentanwälte Partnerschaft mbB

(56) Entgegenhaltungen:
- EP-A1- 0 185 296
- EP-A1- 1 512 993
- WO-A2-2007/095241
- DE-A1- 2 537 262
- US-A- 4 350 481

## Beschreibung

Die Erfindung betrifft ein Verfahren zur Herstellung eines Formkörpers mit Mikrostrukturen nach der im Oberbegriff von Anspruch 1 angegebenen Art sowie eine Vorrichtung zur Erzeugung eines Formkörpers mit Mikrostrukturen nach der im Oberbegriff des Anspruchs 9 angegebenen Art.

Mikrostrukturen findet man in unterschiedlichsten Anwendungen. Ein Anwendungsbereich ist die Mikrofluidik. Im Speziellen nutzt man diese für Chip-Labore und sogenannte Bio-Disks. Zur Herstellung von Mikrokanälen verwendet man zum Beispiel eine mikrostrukturierte Oberfläche, die Vertiefungen aufweist. Um die Kanäle letztendlich abzuschließen, wird diese Oberfläche des Substrats mit einer Oberfläche eines weiteren Substrats, die nicht zwangsläufig strukturiert sein muss, verbunden.

Zur Herstellung von Mikrostrukturen sind unterschiedlichste Verfahren bekannt. Eine Möglichkeit der Herstellung sind Abformtechniken, bei denen Abformmaterial durch eine Form, die ein Negativabbild der gewünschten Struktur darstellt, strukturiert wird. Dazu wird ein flüssiges Material auf oder in eine Form eingebracht, ausgehärtet und dann wieder ausgelöst. Schwierigkeiten treten bei der Erzeugung von Strukturen hoher Oberflächenqualität auf, da Gaseinschlüsse gemessen an der Größe der Mikrostrukturen sehr störend sind. Gaseinschlüsse entstehen vornehmlich in den Kavitäten der Strukturen sowie im Abformmaterial selbst.

Die Negativform zur gewünschten Struktur wird beispielsweise durch ein weiteres Verfahren zur mikrotechnischen Strukturierung hergestellt, wobei ein Wafer mit Fotolack beschichtet wird, der durch eine Maske belichtet, entwickelt und schlussendlich der Wafer durch Ätzen strukturiert wird. Ein besonders geeignetes Substrat für dieses Verfahren ist Silizium. Mit der auf diese Weise hergestellten Negativform können weitere Mikrostrukturen abgeformt werden.

Bekannt ist es, eine Abformmasse auf eine mikrostrukturierte Form aufzuspachteln. Das Material wird dann ausgehärtet und daraufhin aus der Form ausgelöst. Dieses Verfahren hat den Nachteil, dass der aufgebrachte Druck relativ gering ist, und sich die Gaseinschlüsse nur schwer herausdrängen lassen. Dieses Verfahren ist technisch nicht sehr aufwendig und auch für relativ kleine Stückzahlen denkbar. Um das Problem der Gaseinschlüsse weiter zu behandeln ist ein nachträgliches Entgasen im Vakuum vorgesehen. Trotz dieses Verfahrensschritts ist die Oberflächenqualität sowie die Strukturausbildung verbesserbar.

Weiterhin ist ein Spritzgussverfahren bekannt, bei dem im Wesentlichen das Abformmaterial über eine Schnecke in einen Hohlraum befördert wird, welcher eine mikrostrukturierte Oberfläche aufweist. Durch den Druck der Schnecke wird die eine niedrige Viskosität aufweisende Schmelze, in die Kavitäten verpresst. Dabei treten grundsätzlich Lufteinschlüsse im mikroskopischen Bereich auf. Diese wirken sich schädlich auf die auszubildenden Strukturen aus. Daher ist eine aufwendige Entlüftung notwendig. Trotz dieser ist die Qualität der Oberflächen dennoch durch Gaseinschlüsse beeinträchtigt.

Ein weiteres Verfahren zur Erzeugung von Mikrostrukturen stellt das sogenannte Heißprägen dar. Beim Heißprägen wird ein Polymerrohling in eine Prägeform eingelegt. Die Form wird aufgeheizt, und bei Erreichen der entsprechenden Temperatur, wird die Mikrostruktur mit einem Stempel eingeprägt. Bei einem hohen Aspektverhältnis ist es auch mit diesem Verfahren unabdingbar, das Verfahren im Vakuum durchzuführen. Auch in diesem Verfahren bleiben Lufteinschlüsse im Abformmaterial bestehen.

Zudem ist es grundsätzlich nach der DE 34 44 996 A1 bekannt, ein Entgasen eines Polymers mittels Zentrifugation zu betreiben. In dieser Druckschrift wird die Herstellung eines Kunststoffformteils in einer Formschale, die aus einer Zentrifugenschale besteht offenbart. Die Form ist dabei in den Schalenboden eingebracht. Das polymere Kunststoffmaterial wird in die Schale eingebracht, woraufhin dieser geschleudert wird.

Dieses Vorgehen hat den Nachteil, dass die entstehende Schicht nicht homogen ist, da die Zentrifugalkraft nur in der Mitte des Behälterbodens ausschließlich normal zum Schalenboden angreift. Daher wird bei diesem Verfahren Material in den Randbereich verschoben, was zu keiner homogenen Schichtdicke über die gesamte Formfläche führt. Daher eignet sich dieses Verfahren nicht, da zwar blasenfreie Formkörper hergestellt werden, jedoch zur Herstellung von Mikrostrukturen die Toleranz zu groß ist.

Ferner ist aus dieser Druckschrift bekannt, eine Platte auf das Polymer zu legen, um die Kräfte auf das Polymer zu verstärken. Dies hat den Nachteil, dass die Platte entgegengesetzt der Verdrängungsrichtung angeordnet ist, und die aus dem Material verdrängten Gaseinschlüsse letztendlich doch am endgültigen Austritt aus dem Polymer gehindert werden.

Darüber hinaus ist aus der EP 1 512 993 A1 ein Verfahren bekannt, das die Herstellung von Mikrostrukturen beschreibt. Gemäß diesem Verfahren wird ein Polymer auf einen Drehscheibe aufgebracht und mit einem, mit einer Mikrostruktur versehenen Wafer schwimmend abgedeckt. Dieses Verfahren gewährleistet eine Herstellung mit homogener Schichtdicke. Da die Zentrifugalkraft in Richtung der Randbereiche wirkt, um das Polymer zu verteilen, werden entsprechend dem Prinzip der Stofftrennung Gase nicht nach außen transportiert. Dieses Verfahren hat den Nachteil, dass damit keine blasenfreier Formkörper erzeugbar ist.

Aus der WO 2007/095241 A2 ist ein gattungsgemäßes Verfahren zur Erzeugung eines Formkörpers mit Mikrostrukturen aus Abformmaterial und eine gattungsgemäße Vorrichtung zur Erzeugung eines Formkörpers mit Mikrostrukturen aus Abformmaterial bekannt. In einen einen Abformraum aufweisenden Behälter wird Abformmaterial in Form eines Zweikomponenten-Materials eingebracht. Im Abformraum ist dabei am Boden eine mikrostrukturierte Form vorgesehen. Nach dem Einbringen des Abformmaterials wird der Behälter zentrifugiert, bis das Material vollständig in die Bodenstruktur der Form eingedrungen ist. Dann härtet das Abformmaterial zu einem Formkörper mit Mikrostrukturen aus und wird anschließend aus der Form ausgelöst.

Aus der US 4 350 481 A offenbart in einer Vakuumkammer eine Rotationsvorrichtung mit Abformbehältern, in die jeweils Abformmasse aus einem zentralen Speicher eingebracht wird. Über das Vakuum und die Rotation entweicht Gas aus der Abformmasse.

Die DE 25 37 262 A und die EP 0 185 296 A offenbaren jeweils eine Rotationsvorrichtung mit einem eine Gießform aufweisenden Behälter, in dem Abformmasse eingebracht und während der Rotation ausgehärtet wird. Die EP 0185 296 A weist zudem einen die Abformmasse bis auf den Randbereich bedeckenden Deckel auf, so dass durch den Randbereich Gas aus der Abformmasse entweichen kann. Der Erfindung liegt die Aufgabe zugrunde, ein Verfahren und eine Vorrichtung unter Vermeidung der genannten Nachteile anzugeben, die eine Herstellung von mikrostrukturierten Oberflächen höchster Qualität, also mit minimalsten Gaseinschlüssen, mit relativ geringem technischem Aufwand erlaubt.

Diese Aufgabe wird für das Verfahren durch die kennzeichnenden Merkmale des Anspruches 1 in Verbindung mit seinen Oberbegriffsmerkmalen und für die Vorrichtung durch die kennzeichnenden Merkmale des Anspruchs 9 in Verbindung mit seinen Oberbegriffsmerkmalen gelöst.

Der Erfindung liegt die Erkenntnis zugrunde, dass durch eine Zentrifuge hohe Kräfte aufgebracht werden können, die zum einen das Verpressen und zum anderen das Entgasen von Material ermöglichen.

Das erfindungsgemäße Verfahren weist die im Folgenden genannten Schritte auf. Das Verfahren umfasst das Einfüllen des Abformmaterials in einen Behälter, der eine mikrostrukturierte Form umfasst. Weiterhin erfolgt ein Zentrifugieren des Behälters. Das Abformmaterial wird, ausgehend vom Behälterboden in Richtung Behälteröffnung, nach und nach verdichtet. Die vorgegebene Form wird auf diese Weise mit Abformmaterial relativ hoher Dichte aufgefüllt. Durch die Behälterform sind die Konturen des Abformkörpers vorgegeben, was eine gleichbleibende Schichtdicke auch im Mikrometerbereich gewährleistet. Indem das Abformmaterial in dem Abformraum mit ausreichend hoher Kraft verpresst wird, kann die genaue Kraftwirkung vernachlässigt werden. Darüber hinaus wird das Abformmaterial zu dem Formkörpers ausgehärtet. Weiterhin beinhaltet das erfindungsgemäße Verfahren das Auslösen des erzeugten Formkörpers mit Mikrostruktur aus der Form und dem Behälter. Nach der Erfindung wird im Abformungsraum insbesondere der Formkörper erzeugt, der eine erste und eine zweite Fläche auf seiner Oberfläche aufweist. Die beiden Flächen sind entfernt voneinander angeordnet. Eine erste Fläche wird strukturiert, indem das Abformmaterial durch die Zentrifugalkraft in die Form eingepresst wird. Auf die zweite Fläche wird aufgrund der Zentrifugalkraft ein Stempelelement gepresst. Die Fläche des Stempelelements bildet auf diese Weise eine Teilfläche der Seitenfläche des Abformraums. Das Drücken des Stempels an das Abformmaterial ermöglicht eine Formgebung der zweiten Fläche. Darüber hinaus wird durch die Masse des Stempelelements zusätzlicher Druck auf das Abformmaterial aufgebracht.

Gemäß einer Ausführungsform der Erfindung erfolgt durch das Stempelelement eine Mikrostrukturierung der zweiten Fläche, da das Stempelelement eine strukturierte Oberfläche aufweist, die in den Abformkörper gepresst wird. Dadurch wird in einem Arbeitsschritt eine mehrflächige Mikrostrukturierung eines Abformkörpers erzielt.

Dieses Verfahren hat den Vorteil, dass durch die Zentrifugation das Abformmaterial mit hohem Druck in die Mikrostrukturen der Form gepresst wird. Weiterhin wird durch den hohen Anpressdruck das Abformmaterial bis in die Ecken der Kavitäten gedrückt, da das Gas, das sich in den Kavitäten befindet, aufgrund der dichteabhängigen Stofftrennung verdrängt wird. Dies sorgt für eine optimal abgeformte Mikrostruktur mit einer hohen Oberflächengüte.

Während des Zentrifugierens erfolgt somit ein Entgasen des Abformmaterials. Das Gas wird im Sinne der dichteabhängigen Stofftrennung verdrängt, wobei das Gas nicht nur aus den Kavitäten der Strukturen sondern darüber hinaus aus dem Material selbst verdrängt wird. Es wird zuerst zur Behälterwand nahe der Zentrifuge verdrängt und anschließend entlang dieser Behälterwand aus dem gesamten Formbereich. Es ist entscheidend, dass das Abformmaterial in einen Behälter, also einen Abformraum eingebracht wird, da nur auf diese Weise die exakte Abformung mit einer gleichbleibenden Schichtdicke gewährleistet ist.

Dieses Verfahren sorgt für eine deutlich schnellere Herstellung der gewünschten Mikrostrukturen, da die bisher übliche Erzeugung von Vakuum und das damit verbundene Entgasen sehr zeitintensiv war. Darüber hinaus ist der technische Aufwand bei dem erfindungsgemäßen Verfahren deutlich geringer, da auf Vakuumeinrichtungen verzichtet werden kann.

Gemäß einer Ausführungsform der Erfindung wird das Abformmaterial während des Zentrifugierens in den Behälter eingebracht. Dies verbessert die Entgasung, sowohl des Materials selbst, als auch die Entgasung der Kavitäten der Mikrostrukturen. Während des Zentrifugierens entweicht das Gas vollständig aus dem Behälter und dieser wird komplett mit Abformmaterial befüllt.

Von Vorteil ist auch, dem Abformmaterial zum Aushärten Wärme zuzuführen. Dies verkürzt in der Regel die Aushärtedauer. Abhängig von der Materialeigenschaft des Abformmaterials hat die Zufuhr von Wärme besondere Bedeutung. Härtet das Material erst ab einem bestimmten Temperaturschwellwert aus, wird es in einem Zustand niedriger Viskosität eingebracht und zeitunabhängig verarbeitet und dann zu einem gewünschten Zeitpunkt durch Aufheizen des Behälters ausgehärtet. Dabei wird der Behälter während der Zentrifugation bis knapp unter die Schwelltemperatur aufgeheizt. Dann ist nur noch ein kleiner, schnell vollziehbarer Temperaturschritt notwendig, um die Aushärtung einzuleiten.

Zudem oder alternativ hierzu kann auch das Material durch Einbringen von Strahlung, insbesondere UV-Strahlung, aushärten. Dabei wird durch die strahlungsdurchlässige Behälterwand Strahlung in das Abformmaterial eingeleitet. Dieses Vorgehen hat den Vorteil, dass das Abformmaterial zu einem gewünschten Zeitpunkt ausgehärtet wird.

Darüber hinaus vorteilhaft ist, dass das Aushärten während des Zentrifugierens stattfindet. Damit härtet das Abformmaterial unter Verdichtungsdruck aus, was den Wiedereinschluss von Gasen vermeidet und eine kompakte Struktur gewährleistet. Dies trägt somit zur hohen Güte der erzeugten Mikrostrukturen auf dem Formkörper aus Abformmaterial bei.

Der ausgehärtete, die Mikrostrukturen aufweisende Formkörper, kann auch, nachdem er aus der Form bzw. dem Behälter ausgelöst wurde, der Endbearbeitung bzw. einer Weiterverarbeitung zugeführt werden. Dadurch kann der Formkörper bedarfsabhängig angepasst werden.

Insbesondere zur Durchführung des Verfahrens wird eine Vorrichtung zur Erzeugung von Formkörpern mit Mikrostrukturen angegeben. Zur Strukturierung des Abformmaterials dient eine Form, die eine mikrostrukturierte Oberfläche aufweist. Erfindungsgemäß ist ein Behälter mit einem Abformraum vorgesehen, wobei der Behälter mit einer Zentrifuge verbindbar ist. Im Abformraum ist mindestens eine mikrostrukturierte Form vorgesehen. Hierbei weist der Behälter ein Oberteil und ein Unterteil auf. Dies erleichtert die Fertigung, da beide Teile getrennt hergestellt und anschließend zusammengefügt werden können. Die beiden Teile sind so ausgebildet, dass sie zusammengefügt miteinander verbundne einen Hohlraum ausbilden, der den Abformraum umfasst. In dem Oberteil des Behälters ist eine Stempelaufnahme für ein Stempelelement vorgesehen Das Unterteil des Behälters weist eine Formaufnahme für eine mikrostrukturierte. Form auf, welche eine Fläche des Abformraums bildet. Das Stempelelement ist so gelagert, dass es durch Zentrifugalkraft in Richtung des Unterteils bewegt wird. Darüber hinaus ist insbesondere zwischen den beiden Teilen eine Dichtung vorgesehen, die ein ungewolltes Austreten des Abformmaterials verhindert.

Nach einer weiteren Ausführungsform ist der Behälter, umfassend ein Oberteil und ein Unterteil, so an der Zentrifuge befestigt, dass das Unterteil weiter vom Zentrum der Zentrifuge beabstandet ist als das Oberteil.

Insbesondere ist es vorteilhaft, dass die Form, während des Betriebs so gelagert ist, dass sich der Abstand der mikrostrukturierten Form zur Drehachse in vertikaler Richtung, von unten nach oben, zunehmend reduziert.

Dies hat den Vorteil, dass das Abformmaterial im Abformraum von der unteren, und folglich von der Drehachse am weitesten entfernten Kante nach oben verfüllt, bzw. verpresst wird. Dadurch werden die Kavitäten der Form vollständig ausgefüllt, und eingeschlossene Gase zunehmend von unten nach oben verdrängt. In dieser Ausführungsform liegt die mikrostrukturierte Form derart, dass die Luftauslassöffnung im Wesentlichen entgegen der Richtung der aufgebrachten Kraft liegt. Dies ermöglicht ein besonders effizientes Entgasen des Polymers. Dies spielt insbesondere bei der Herstellung von Mikrostrukturen eine große Rolle.

Besonders vorteilhaft ist es, wenn die Form parallel zu Ober- und Unterteil angeordnet ist.

Vorzugsweise ist das Unterteil mit einer Formaufnahme für eine mikrostrukturierte Form versehen, die als Aussparung ausgebildet ist. Die Form weist eine mikrostrukturierte Oberfläche auf. Die Form bildet auf diese Weise einen Teil der Seitenfläche des Abformraums. Bei Rotation der Zentrifuge wird dabei durch die Zentrifugalkraft die Form an das Unterteil gepresst und damit arretiert. Daher ist eine zusätzliche mechanische Arretierung der Form nicht notwendig. Die Aufnahme hat den Vorteil, dass so unterschiedliche Formen in den Behälter eingesetzt werden können, womit ein hohes Maß an Flexibilität gewährleistet ist. Durch die Dicke der Form und die Tiefe der Aussparung kann Einfluss auf das Volumen des zu fertigenden Formkörpers, genommen werden. Beim Volumen des Formkörpers, spielt natürlich auch die Ausbildung des Oberteils des Behälters eine Rolle. Bei einem planen Oberteil, kann das Volumen bei gegebener Formgröße lediglich durch die Parameter Dicke der Form und Tiefe der Aussparung gesteuert werden.

Insbesondere ist das Unterteil selbst mit einer mikrostrukturierten Oberfläche versehen. Diese ist in dem Teil des Unterteils ausgebildet, der die Seitenfläche des Abformraums darstellt. Dies hat den Vorteil, dass sich das ausgehärtete Abformmaterial leicht auslösen lässt.

Das Oberteil kann zudem als Stempelelement ausgebildet sein, und/oder eine Aufnahme für das Stempelelement aufweisen. Das Stempelelement ist dabei so gelagert, dass es durch die Zentrifugalkraft in Richtung des Unterteils bewegbar ist. Dies erlaubt die Verformung des eingebrachten Abformmaterials. Darüber hinaus verstärkt die zusätzliche bewegliche Masse des Stempels den auf das Abformmaterial aufgebrachten Druck.

Das Stempelelement kann weiterhin an seiner Kontaktfläche zum Abformmaterial eine Mikrostrukturierung aufweisen. Durch den Druck, welchen das Stempelelement auf das Abformmaterial aufbringt, erfolgt eine Einprägung von Mikrostrukturen in den Formkörper. Vorteilhaft dabei ist, dass durch die Kombination von Einpressung des Abformmaterials in eine erste Form am Unterteil und das Einprägen einer Mikrostruktur durch das Stempelelement eine mehrflächige Strukturierung eines Formkörpers in einem Arbeitsschritt möglich ist.

Vorzugsweise ist die Aufnahme für das Stempelelement mit einer lösbaren Arretierung versehen. Diese Arretierung gewährleistet, dass, sofern der Abformraum noch nicht vollständig mit Abformmaterial gefüllt ist, das Stempelelement den Abformraum nicht blockiert. Die Arretierung kann während des Zentrifugierens zu einem bestimmten Zeitpunkt gelöst werden.

Insbesondere weist das Oberteil eine Material-Aufnahmemündung auf, die ein Befüllen des Abformraums, sowie den Austritt von Gas aus dem Abformraum zulässt. Dies hat den Vorteil, dass das Abformmaterial während des Zentrifugierens in den Abformraum einbringbar ist. Durch die schräge Stellung des Behälters, dessen Öffnung in Richtung der Drehachse angeordnet ist, wird das Abformmaterial durch die Fliehkräfte nach und nach in den Abformraum eingepresst.

In einer weiteren vorteilhaften Ausführungsform ist das Volumen des Abformraums veränderbar. In die Aussparung im Unterteil ist eine zusätzliche Aufnahme eingesetzt. Diese steht über eine Schraube mit dem Unterteil in Wirkverbindung. Durch Drehung der Schraube wird die Aufnahme verschoben und verändert auf diese Weise das Volumen des Abformraums, den die Aussparung generiert.

Der Behälter kann auch beheizbar sein. Eine Heizung des Behälters hat den Vorteil, dass der Aushärteprozess beschleunigt wird. Damit kann bei Verwendung eines entsprechenden Abformmaterials, welches eine bestimmte Aushärtetemperatur aufweist, solange problemlos verarbeitet werden, bis zur Aushärtung die Temperatur über den Schwellwert erhöht wird.

Weiterhin ist eine hohe Temperatur während der Verarbeitung möglich. Dies ist vorteilhaft, wenn das Abformmaterial als Schmelze vorliegt, die in erwärmtem Zustand abgeformt wird und durch Abkühlung aushärtet.

In einer weiteren vorteilhaften Ausführungsform ist der Behälter aus einem strahlungsdurchlässigen, insbesondere UV-durchlässigen Material ausgebildet. Dies hat den Vorteil, dass Abformmaterial verwendet werden kann, das durch Strahlung, insbesondere UV-Strahlung aushärtbar ist. Zu diesem Zweck kann die Vorrichtung weiterhin einen Strahler, insbesondere einen UV-Strahler, umfassen.

Vorzugsweise kann auch die Form beheizbar ausgeführt sein. Dies ermöglicht z. B: das Prägen von Thermoplasten COC - Cyclo-Olefin-Copolymer, oder PS - Polystyrol. Besonders vorteilhaft ist hierbei die Verwendung des Thermoplasts COC - Cyclo-Olefin-Copolymer, das durch eine hervorragende Biokompatibilität und Blutverträglichkeit gekennzeichnet ist.

Besonders vorteilhaft ist es, die Form als mikrostrukturierter Siliziumwafer auszubilden. In Silizium können mit Standard-Verfahren Mikrostrukturen mit einer hohen Oberflächengüte hergestellt werden. Dies ist aufgrund der Standardmäßigkeit des Prozesses verhältnismäßig kostengünstig. Die Qualität der Form wirkt sich selbstredend auch auf die Qualität der Abformung aus.

In einer weiteren vorteilhaften Ausführungsform der Erfindung ist das Abformmaterial als Polymer, insbesondere als zweikomponentiges PDMS, ausgebildet. Polymere finden in vielen Bereichen Anwendung, wie in der Optik oder Fluidik, und lassen sich gut verarbeiten. Der besondere Vorteil von PDMS liegt in einer weitestgehenden Biokompatibilität. Darüber hinaus ist PDMS inert und besitzt dichtende Eigenschaften.

Der Behälter kann zudem über einen Behälterträger mit dem Rotor der Zentrifuge verbunden sein. Dies hat den Vorteil, dass der Behälterträger an die Bedürfnisse der Applikation angepasst werden kann und eine lösbare Verbindung des Behälters mit der Zentrifuge ermöglicht. In diesen Behälterträger können beliebig passende Behälter eingesetzt und entnommen werden.

Weiterhin ist es vorteilhaft, dass der Behälter lösbar mit dem Behälterträger verbunden ist. Dadurch kann der Behälter zum Beispiel für den Austausch der Form oder das Auslösen der erzeugten Struktur von der Zentrifuge getrennt werden. Dies hat eine enorme Erleichterung des Handlings zur Folge.

Insbesondere ist es von Vorteil, den Behälterträger aus einem Trägerblech auszubilden und so zu verspannen, dass die Fliehkräfte seine Form nicht beeinflussen. Durch das Verspannen, wird eine gewichtsarme und dennoch stabile Lösung erzielt.

In vorteilhafter Weise weist der Behälterträger eine Behälteraufnahme auf, die im Wesentlichen den Behälter an seiner Unterseite bezüglich der Schwerkraft umgreifen. Dies hat den Vorteil, dass es zum einen den Becher lösbar mit dem Behälterträger verbindet, zum anderen spart man Material und somit Gewicht an nicht notwendigen Stellen.

Weiterhin kann der Behälter schräg zur Drehachse der Zentrifuge gelagert sein. Dies ist vorteilhaft, da durch die Neigung zum einen die Verteilung der Abformmasse im Abformraum optimiert wird und zum anderen eine optimale Lagerung für die Entgasung einstellbar ist.

Die Erzeugung von polymeren Formkörpern mit Mikrostrukturen durch Zentrifugation, ist eine technisch einfache, effiziente und schnelle Möglichkeit der Herstellung dieser Strukturen in höchster Qualität.

Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im Folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet. Es zeigen:
- Fig. 1: eine Schnittdarstellung von Zentrifuge mit Behälterträger und Behältern nach der Erfindung;
- Fig. 2: eine Schnittdarstellung des Behälters aus Fig. 1;
- Fig. 3: eine Explosionsdarstellung des Behälters;
- Fig. 4: eine 3D Ansicht des Behälterträgers mit Behältern, und
- Fig. 5: eine Schnittdarstellung eines Trägerblechs.

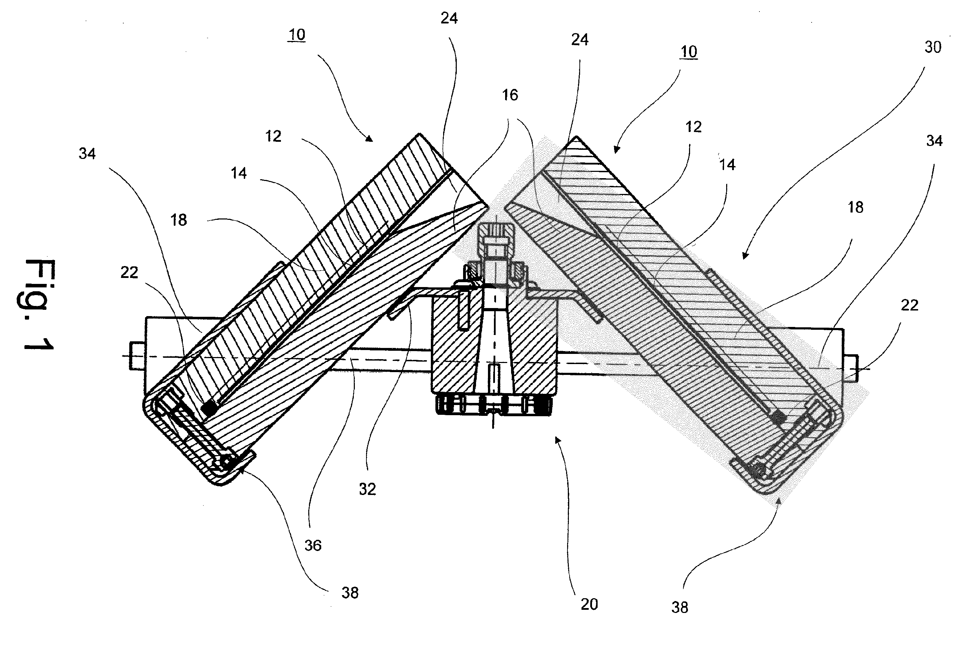

Fig. 1 zeigt die Schnittdarstellung einer Zentrifuge 20, an deren Rotor ein Behälterträger 30 befestigt ist. Der Behälterträger 30 weist zwei U-förmig ausgebildete Aufnahmetaschen 38 auf, in welchen jeweils ein Behälter 10 eingesetzt ist.

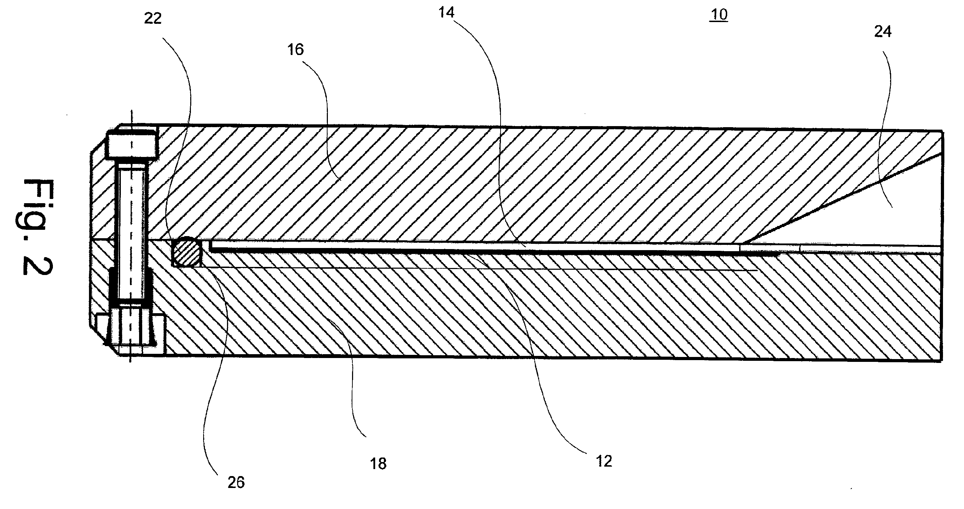

Der Behälter 10, der in einer vergrößerten Darstellung nochmals in Fig. 2 gezeigt ist, umfasst dabei ein Oberteil 16 und ein Unterteil 18. Der Behälter 10 weist darüber hinaus einen Abformraum 14, sowie eine Schnurdichtung 22 auf, die zwischen Oberteil 16 und Unterteil 18 liegt. In eine Aussparung des Unterteils 18 ist eine mikrostrukturierte Form 12 eingesetzt. Oberteil 16 und Unterteil 18 werden durch Verschraubungen zusammengehalten. Das Oberteil 16 weist eine Material-Aufnahmemündung 24 auf, über die das Abformmaterial in die Form eingegeben wird.

Wie der Fig.1 weiter zu entnehmen ist, ist das Unterteil 18 des Behälters 10 weiter von der Drehachse der Zentrifuge 20 beabstandet als das Oberteil 16. Zudem ist der obere Bereich, nahe der Behälteröffnung, der Mikrostrukturierten Form 12 näher an der Drehachse (D) als der in vertikale Richtung unten liegende Bereich, der sich nahe dem Behälterboden befindet.

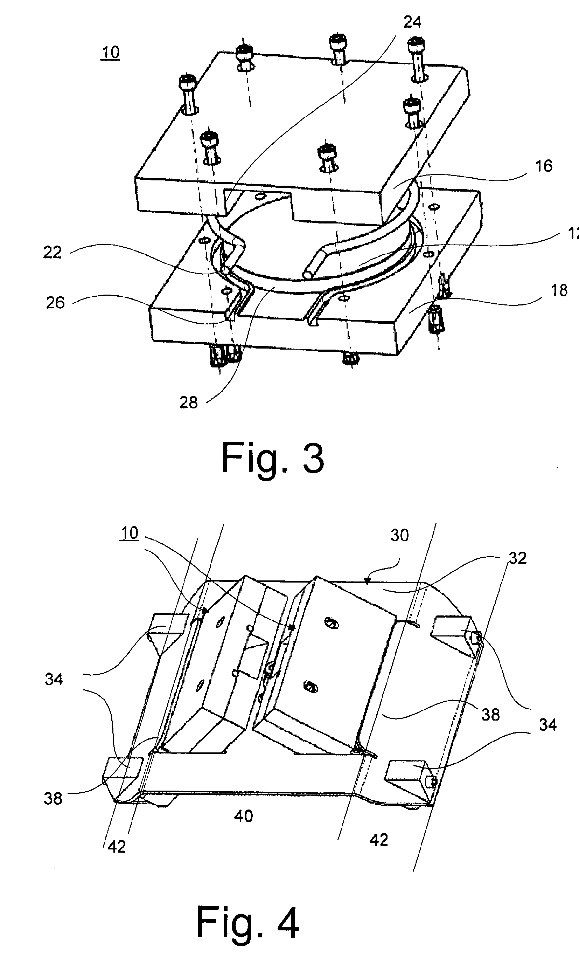

Der Behälterträger 30 wird in Fig.4 näher beschrieben. Hervorzuheben ist hier der Zugstab 36, dieser verbindet dabei zwei Druckstücke 34 miteinander. Die Druckstücke 34 liegen an den Außenseiten der Behälteraufnahmen 38 an. Der Zugstab 36 dient zur Verstärkung des Trägerblechs 32. Diese Konstruktion gewährleistet, dass sich der Behälterträger 30 während des Zentrifugierens nicht verformt.

Dreht sich die Zentrifuge 20 um ihre Drehachse, sorgen die Fliehkräfte dafür, dass der mikrostrukturierte Wafer, der als Form 12 dient, gegen das Unterteil 18 gedrückt wird. Dies erlaubt auf eine zusätzliche mechanische Arretierung zu verzichten. Weiter fließt das in die Material-Aufnahmemündung 24 eingebrachte PDMS in den Abformraum 14 und wird dort durch die Zentrifugalkräfte in die Mikrostrukturen des Wafers 12 gedrückt. Das gesamte PDMS wird nach und nach in den Abformraum 14 gedrückt. Durch die dichteabhängige Stofftrennung wird das PDMS entgast, sowie auch die Luft aus dem gesamten Abformraum 14 verdrängt. Ist ein gasfreier komplett gefüllter Abformraum 14 erreicht, härtet das PDMS aus. Dazu wird der Behälter 10 auf über 80°C während des Zentrifugierens erhitzt. Nach dem Aushärten kann dann die Polymer-Scheibe, mit etwa 1,5 mm Dicke und einer mikro-strukturierten Oberfläche entnommen werden.

Fig. 2 zeigt eine Schnittdarstellung eines Behälters 10. Besonders gut sieht man in dieser Darstellung den Abformraum 14, in welchen das Abformmaterial eingebracht wird. Die mikrostrukturierte Form 12 ist in die Formaufnahme 28 im Unterteil 18 eingesetzt, wobei die Formaufnahme 28 als Aussparung ausgebildet ist. Eine Schnurdichtung 22 ist in die vorgesehene Nut 26 eingepresst. Diese sorgt dafür, dass das Abformmaterial nicht aus dem Behälter 10 entweicht. Die Aufnahme für das Abformmaterial 24 wird durch eine Ausnehmung des Oberteils 16 gebildet. Die beiden Teile 16, 18 des Behälters 10 sind durch Schrauben miteinander verbunden. Die Dicke der ausgebildeten Schicht ist von der Tiefe der Aussparung und der Höhe der mikrostrukturierten Form 12 abhängig. Das Abformmaterial kann dabei von der Material-Aufnahmemündung 24 in den Abformraum 14 fließen. Dies erlaubt eine Zufuhr des Abformmaterials während des Zentrifugierens.

Erfindungsgemäß weist das Oberteil 16 mit der Material-Aufnahmemündung 24ein Stempelelement auf. Das Stempelelement ist in einer Stempelaufnahme für das Stempelelement aufgenommen. Das Stempelelement ist dabei so gelagert, dass es durch die Zentrifugalkraft in Richtung des Unterteils 18 bewegt wird. Dies erlaubt die Verformung des eingebrachten Abformmaterials. Das Stempelelement hat an seiner Kontaktfläche zum Abformmaterial eine Mikrostrukturierung. Durch den Druck, welchen das Stempelelement auf das Abformmaterial aufbringt, erfolgt eine Einprägung von Mikrostrukturen in den Formkörper. Die Aufnahme für das Stempelelement ist mit einer lösbaren Arretierung (nicht gezeigt) versehen. Die Arretierung gewährleistet, dass, sofern der Abformraum 14 noch nicht vollständig mit Abformmaterial gefüllt ist, das Stempelelement den Abformraum nicht blockiert. Die Arretierung kann während des Zentrifugierens zu einem bestimmten Zeitpunkt gelöst werden.

In Fig. 3 ist eine Explosionszeichnung des Behälters 10 dargestellt. Die Aufnahme der mikrostrukturierten Form 12 ist durch eine kreisförmige Aussparung gebildet. Die Form 12 ist in diesem Fall als ein 4-Zoll Silizium-Wafer ausgebildet. Die Schnurdichtung 22 umschließt weitestgehend die Formaufnahme 28. Analog zur Lage der Material-Aufnahmemündung 24, bildet die Schnurdichtung 22 an dieser Stelle die Dichtung für die Material-Aufnahmemündung. Somit ist es dem Abformmaterial möglich von der Aufnahme in den Abformraum 14 zu gelangen. Die Formaufnahme 28 ist als kreisförmige Ausnehmung des Unterteils 18 ausgebildet.

Wie die Fig. 3 weiter zeigt werden die beiden Teile des Behälters 10 mit insgesamt 6 Schrauben miteinander verbunden. Diese werden durch das Oberteil 16 gesteckt und mit den in das Unterteil 18 eingebrachten Blindnietmuttern, verschraubt. Die befestigten Schrauben sind dann sowohl im Oberteil 16 als auch im Unterteil 18 versenkt. Diese Verbindung sorgt dafür, dass keine Relativbewegung zwischen dem Oberteil 16 und dem Unterteil 18 auftritt, und die Schnurdichtung 22 ausreichend komprimiert wird.

Die erzeugte Scheibe hat einen Durchmesser von etwa 100 mm und besteht aus PDMS. Die Struktur kann zum Beispiel als Biodisk oder Teil eines Chiplabors Verwendung finden. Als Negativform dient ein mikrostrukturierter Standard 4-Zoll-Silizium-Wafer.

Zum Auslösen der Struktur werden die Schrauben wieder herausgedreht. Dann können Oberteil 16 und Unterteil 18 getrennt werden und die Scheibe mit der erzeugten Mikrostruktur aus dem Wafer ausgelöst werden.

Fig. 4 zeigt einen Behälterträger 30 mit zwei eingesetzten Behältern 10 in einer dreidimensionalen Ansicht. Wie in Fig. 4 zu sehen weist der Behälterträger 30 einen Mittelbereich 40 und sowie an beiden Enden jeweils einen Randbereich 42 auf. Der Mittelbereich 40 liegt dabei senkrecht zur Drehachse. Die Randbereiche 42 sind dabei in einem 45° Winkel zum Mittelbereich 40 angeordnet. Weiterhin ist der Randbereich 42 als Aufnahme für einen Behälter 10 ausgebildet. Der Behälterträger 30 umfasst ein Trägerblech 32, aus welchem U-förmige Aufnahmetaschen 38 ausgebildet sind.

Fig. 4 sind darüber hinaus Verstärkungsstrukturen zu entnehmen, die Druckstücke 34 und Zugstäbe 36 umfassen. In dieser Darstellung sieht man vor allem die paarweise gegenüberliegenden Druckstücke 34, die neben den Aufnahmetaschen 38 angebracht sind. Die Zugstäbe 36, die an jedem Ende ein Innengewinde aufweisen, sind jeweils durch Schrauben mit den Druckstücken 34 verbunden. Diese tragen für die Stabilisation der Randbereiche 42 Sorge. Ohne diese Konstruktion würde sich das an den Enden schräge Trägerblech 32 unter den auftretenden Kräften, aufgrund der verhältnismäßig großen Masse der Behälter 10 verbiegen.

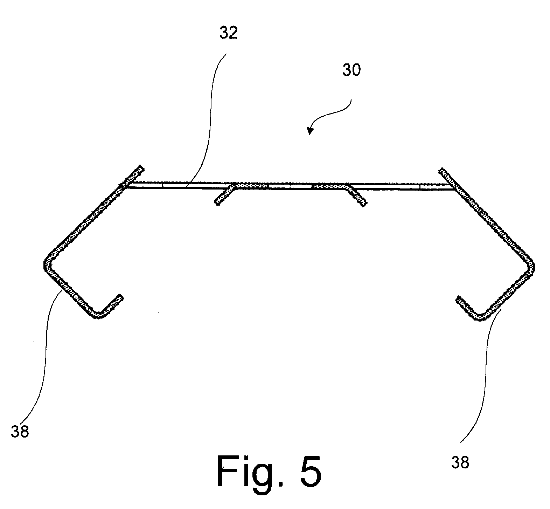

Fig. 5 zeigt das Trägerblech 32 in einer Schnittansicht. Besonders gut werden hier die U-förmigen Aufnahmetaschen 38 deutlich. Sehr gut sieht man auch die schräge Anstellung der Aufnahmetaschen 38.

### Bezugszeichenliste

- 10: Behälter
- 12: Mikrostrukturierte Form
- 14: Abformraum
- 16: Oberteil
- 18: Unterteil
- 20: Zentrifuge
- 22: Dichtung / Schnurdichtung
- 24: Aufnahmemündung
- 26: Nut für Dichtung
- 28: Formaufnahme
- 30: Behälterträger
- 32: Trägerblech
- 34: Druckstück
- 36: Zugstab
- 38: Behälteraufnahme

## Patentansprüche

1. Verfahren zur Erzeugung eines Formkörpers mit Mikrostrukturen aus Abformmaterial, mit folgenden Schritten: Einbringen eines Abformmaterials in einen, einen Abformraum (14) aufweisenden Behälter (10), wobei im Abformraum (14) mindestens eine mikrostrukturierte Form (12) vorgesehen ist; Zentrifugieren eines Behälters (10) bis das Abformmaterial vollständig in die Struktur der Form (12) eingedrungen ist; Aushärten des Abformmaterials zu einem Formkörper mit Mikrostrukturen; Auslösen des Formkörpers aus der Form (12) und dem Behälter (10), **gekennzeichnet durch** die Erzeugung eines Formkörpers, der eine erste und eine zweite Fläche aufweist, wobei diese entfernt von einander angeordnet sind, mit mindestens einer mikrostrukturierte Oberfläche, die **dadurch** erzeugt wird, dass an der ersten Fläche, das Abformmaterial **durch** die Zentrifugalkraft in eine erste Form (12) eingepresst wird, auf der zweiten Fläche ein Stempelelement **durch** die Zentrifugalkraft auf die Schicht des Abformmaterials gepresst wird.

2. Verfahren nach Anspruch 1, **dadurch gekennzeichnet, dass** auf der zweiten Seite eine Mikrostrukturierung der Oberfläche erzielt wird, indem diese durch ein Stempelelement, welches eine mikrostrukturierte Oberfläche aufweist, eingeprägt wird.

3. Verfahren nach Anspruch 1 oder 2, **dadurch gekennzeichnet, dass** das Abformmaterial während des Zentrifugierens eingebracht wird.

4. Verfahren nach einem der vorangehenden Ansprüche, **dadurch gekennzeichnet, dass** während des Zentrifugierens, ein Entgasen des Abformmaterials stattfindet.

5. Verfahren nach einem der vorangehenden Ansprüche, **dadurch gekennzeichnet, dass** das Aushärten durch Einbringen von Wärme erzielt wird.

6. Verfahren nach einem der vorangehenden Ansprüche, **dadurch gekennzeichnet, dass** das Aushärten durch Einbringen von Strahlung, insbesondere UV-Strahlung erzielt wird.

7. Verfahren nach einem der Ansprüche 5 oder 6, **dadurch gekennzeichnet, dass** das Aushärten während des Zentrifugierens stattfindet.

8. Verfahren nach einem der vorangehenden Ansprüche, **dadurch gekennzeichnet, dass** die erzeugte Form einer End- oder Weiterverarbeitung zugeführt wird.

9. Vorrichtung zur Erzeugung eines Formkörpers mit Mikrostrukturen mittels eines Abformmaterials, wobei eine mikrostrukturierte Oberfläche als Form (12) für das Abformmaterial dient, wobei ein Behälter (10) vorgesehen ist, in den die Form (12) eingebracht ist, und der Behälter (10), mit einer Zentrifuge verbindbar ist, mit welcher der Behälter (10) um eine Drehachse (D) drehbar ist, der Behälter (10) einen Abformraum (14) für die Aufnahme für das Abformmaterial aufweist und der Abformraum (14) mit mindestens einer mikrostrukturierten Form (12) versehen ist, **dadurch gekennzeichnet, dass** der Behälter (10, 11) ein Oberteil (16) und ein Unterteil (18) aufweist, die miteinander derart verbunden sind, dass die beiden Teile einen Hohlraum ausbilden, der den Abformraum (14) umfasst, und dass in dem Oberteil (16) des Behälters (10) eine Stempelaufnahme für ein Stempelelement vorgesehen ist und das Unterteil (18) eine Formaufnahme für mikrostrukturierte Form (12) aufweist, welche eine Fläche des Abformraums (14) bildet, wobei das Stempelelement so gelagert ist, dass es durch Zentrifugalkraft in Richtung des Unterteils (18) bewegt wird.

10. Vorrichtung nach Anspruch 9, **dadurch gekennzeichnet, dass** sich der Abstand der mikrostrukturierten Form (12) zur Drehachse (D), in vertikaler Richtung nach oben zunehmend reduziert.

11. Vorrichtung nach Anspruch 9 oder 10, **dadurch gekennzeichnet, dass** zwischen Oberteil (16) und Unterteil (18) eine Dichtung (22) vorgesehen ist, welche ein ungewolltes Austreten von Abformmaterial verhindert.

12. Vorrichtung nach einem der vorgenannten Ansprüche 9 bis 11, **dadurch gekennzeichnet, dass** das Unterteil (18) weiter von der Drehachse der Zentrifuge (20) entfernt ist als das Oberteil (16).

## Claims

1. Method for producing a moulded part with microstructures from impression material, comprising the following steps: Introducing the impression material into a container (10) having an impression space (14), said impression space (14) including at least one microstructured mould (12); centrifuging a container (10) until said impression material has completely penetrated the structure of the mould (12); curing the impression material to give a moulded part with microstructures; removing said moulded part from the mould (12) and the container (10), **characterized by** the production of a moulded part having first and second surfaces which are spaced from each other, with at least one microstructured surface which is produced by centrifugal force pressing the impression material into a first mould (12) on said first surface, and by centrifugal force pressing a die element on said second surface onto the impression material layer.

2. Method as claimed in claim 1 **characterized in that** on the second side, a microstructure is generated on the surface which is impressed by a die element having a microstructured surface.

3. Method as claimed in claims 1 or 2 **characterized in that** the impression material is introduced during centrifuging.

4. Method as claimed in one of the preceding claims **characterized in that** the impression material is degassed during centrifugation.

5. Method as claimed in one of the preceding claims **characterized in that** curing is accomplished by the introduction of heat.

6. Method as claimed in one of the preceding claims **characterized in that** curing is accomplished by the introduction of radiation, in particular UV radiation.

7. Method as claimed in one of claims 5 or 6 **characterized in that** curing takes place during centrifuging.

8. Method of one of the preceding claims **characterized in that** the produced moulded part is subjected to a final or further processing step.

9. Device for producing a moulded part with microstructures by means of an impression material, with a microstructured surface serving as a mould (12) for the impression material, in which a container (10) is provided into which the mould (12) has been introduced, which container (10) is adapted to be connected to a centrifuge which allows the container (10) to be rotated about an axis of rotation (D), said container (10) having an impression space (14) for accommodating the impression material, which impression space (14) is provided with at least one microstructured mould (12) **characterized in that** the container (10,11) has a top part (16) and a bottom part (18) which two parts are interconnected so as to form a cavity which comprises the impression space (14), and that a die locator for a die element is provided in the top part (16) of the container (10), and that the bottom part (18) has a mould locator for the microstructured mould (12) which forms a surface of the impression space (14), said die element being mounted such that it will move toward the bottom part (18) under the action of centrifugal force.

10. Device as claimed in claim 9 **characterized in that** the distance of the microstructured mould (12) from the axis of rotation (D) progressively decreases toward the top in the vertical direction.

11. Device as claimed in one of claims 9 or 10 **characterized in that** a seal (22) is provided between the top part (16) and the bottom part (18) so as to prevent any undesired leakage of impression material.

12. Device as claimed in one of preceding claims 9 to 11 **characterized in that** the bottom part (18) is spaced further from the axis of rotation (D) of the centrifuge (20) than the top part (16).

## Revendications

1. Procédé destiné à fabriquer un corps moulé présentant des microstructures en matériau à empreinte, comprenant les étapes suivantes : l'introduction d'un matériau à empreinte dans un conteneur (10) présentant un espace pour les empreintes (14), un moule microstructuré (12) étant au moins prévu dans l'espace pour les empreintes (14) ; la centrifugation d'un conteneur (10) jusqu'à ce que le matériau à empreinte ait complètement pénétré dans la structure du moule (12) ; le durcissement du matériau à empreinte en un corps moulé présentant des microstructures ; détachement du corps moulé du moule (12) et du conteneur (10), **caractérisé en ce que** la production d'un corps moulé, qui présente une première et une seconde faces, celles-ci étant agencées de manière éloignée l'une de l'autre, avec au moins une surface microstructurée qui est produite de sorte que, au niveau de la première face, le matériau à empreinte soit injecté au moyen de la force centrifuge dans un premier moule (12) et un élément d'emboutissage est pressé au moyen de la force centrifuge au niveau de la seconde face sur la couche de matériau à empreinte.

2. Procédé selon la revendication 1, **caractérisé en ce qu'**une microstructure de surface est obtenue sur la seconde face en marquant celle-ci à l'aide d'un élément d'emboutissage qui présente une surface microstructurée.

3. Procédé selon la revendication 1 ou 2, **caractérisé en ce que** le matériau à empreinte est introduit durant la centrifugation.

4. Procédé selon l'une quelconque des revendications précédentes, **caractérisé en ce que**, durant la centrifugation, un dégazage du matériau à empreinte a lieu.

5. Procédé selon l'une quelconque des revendications précédentes, **caractérisé en ce que** le durcissement est obtenu par une application de chaleur.

6. Procédé selon l'une quelconque des revendications précédentes, **caractérisé en ce que** le durcissement est obtenu par une application d'un rayonnement, notamment d'un rayonnement UV.

7. Procédé selon l'une quelconque des revendications 5 ou 6, **caractérisé en ce que** le durcissement a lieu durant la centrifugation.

8. Procédé selon l'une quelconque des revendications précédentes **caractérisé en ce que** le moule produit est destiné à un autre traitement ou à un traitement final.

9. Dispositif destiné à la production d'un corps moulé présentant des microstructures au moyen d'un matériau à empreinte, une surface microstructurée servant de moule (12) pour le matériau à empreinte, un conteneur (10) étant prévu, dans lequel le moule (12) est introduit, et le conteneur (10) pouvant être relié à une centrifugeuse, avec laquelle le conteneur (10) peut tourner autour d'un axe de rotation (D), le conteneur (10) présentant un espace pour l'empreinte (14) pour accueillir le matériau à empreinte et l'espace pour les empreintes (14) étant pourvu d'au moins un moule microstructuré (12), **caractérisé en ce que** le conteneur (10,11) présente une partie supérieure (16) et une partie inférieure (18) qui sont reliées l'une à l'autre de sorte que les deux parties forment une cavité qui comprend l'espace pour les empreintes (14) et **en ce que**, dans la partie supérieure (16) du conteneur (10), un logement pour l'élément d'emboutissage est prévu et la partie inférieure (18) présente un logement pour le moule microstructuré (12) qui forme une face de l'espace pour les empreintes (14), l'élément d'emboutissage étant stocké de manière à être déplacé par la force centrifuge en direction de la partie inférieure (18).

10. Dispositif selon la revendication 9, **caractérisé en ce que** la distance du moule microstructuré (12) se réduit de façon croissante par rapport à l'axe de rotation (D) vers le haut, en direction verticale.

11. Dispositif selon la revendication 9 ou 10, **caractérisé en ce qu'**une étanchéité (22), qui empêche toute fuite indésirable de matériau à empreinte, est prévue entre la partie supérieure (16) et la partie inférieure (18).

12. Dispositif selon l'une quelconque des revendications 9 à 11, **caractérisé en ce que** la partie inférieure (18) est plus éloignée par rapport à l'axe de rotation de la centrifugeuse (20) que la partie supérieure (16).
